# EUROPÄISCHE PATENTANMELDUNG

(11) **EP 1 059 187 A2**
(43) Veröffentlichungstag der Anmeldung: **13.12.2000**
(21) Anmeldenummer: 00890185.2
(22) Anmeldetag: 06.06.2000
(51) Int. Cl.: B60K 28/16, F02D 11/00

(54) **Vorrichtung zur Steuerung einer Drosselklappe zur Schlupfregelung einer Brennkraftmaschine**

(30) Priorität: 10.06.1999 AT 103199
(71) Anmelder: Microcon Software Entwicklung GmbH, 8530 Deutschlandsberg (AT)
(72) Erfinder: Kölbl, Heinz, Ing., 8402 Werndorf (AT)
(74) Vertreter: Babeluk, Michael, Dipl.-Ing. Mag.

(57) **Zusammenfassung**

Die vorliegende Erfindung betrifft eine Vorrichtung zur Steuerung einer Brennkraftmaschine mit innerer Verbrennung, mit mindestens einer Drosselklappe (4a, 4b, 4c, 4d) zur Steuerung des Durchflusses der angesaugten Luft bzw. des angesaugten Gemisches, die von einem Stellmotor (5a, 5b, 5c, 5d; 15; 25) betätigt wird, einem Fahrpedal (8) zur Beeinflussung der Stellung der Drosselklappe (4a, 4b, 4c, 4d), einer Steuerungseinrichtung (6) zur Ansteuerung des Stellmotors (5a, 5b, 5c, 5d; 15; 25) und einem Sensor (9) zur Erfassung des Schlupfs vor mindestens einem Antriebsrad (10). Die Erfindung ist dadurch gekennzeichnet dass der Stellmotor (5a, 5b, 5c, 5d; 15; 25) die Drosselklappe (4a, 4b, 4c, 4d) in einem direkten Übersetzungsverhältnis betätigt und dass die Steuerungseinrichtung (6) aufgrund der Stellung des Fahrpedals (8) und gegebenenfalls anderer Parameter eine vorläufige Sollstellung der Drosselklappe (4a, 4b, 4c, 4d) berechnet, dass sie weiters aufgrund des Signals des Sensors (9) einen Korrekturwert berechnet, der vom augenblicklichen Schlupf abhängt, und dass sie diese vorläufige Stellung um den Korrekturwert korrigiert, um eine Sollstellung zu erhalten und den Stellmotor (5a, 5b, 5c, 5d; 15; 25) entsprechend ansteuert.

## Beschreibung

Die Erfindung betrifft eine Vorrichtung zur Steuerung einer Brennkraftmaschine mit innerer Verbrennung, mit mindestens einer Drosselklappe zur Steuerung des Durchflusses der angesaugten Luft bzw. des angesaugten Gemisches, die von einem Stellmotor betätigt wird, einem Fahrpedal zur Beeinflussung der Stellung der Drosselklappe, einer Steuerungseinrichtung zur Ansteuerung des Stellmotors und einem Sensor zur Erfassung des Schlupfs von mindestens einem Antriebsrad.

Bei Kraftfahrzeugen mit leistungsstarken Motoren besteht vielfach die Problematik des Durchdrehens von Antriebsrädern. Um die damit zusammenhängenden Gefahren zu verringern, ist eine Vielzahl unterschiedlicher Systeme entwickelt worden, die allgemein als Antischlupfsysteme oder Systeme zur Traktionskontrolle bezeichnet werden. Eine Möglichkeit zur Verwirklichung einer solchen Traktionskontrolle besteht in der selektiven Ansteuerung der Bremsen eines Antriebsrades, wenn der zulässige Schlupf überschritten wird. Solche Systeme sind zwar wirksam, besitzen jedoch den Nachteil der übermäßigen Beanspruchung der Bremsen, was zu deren Überhitzung oder zu übermäßigem Verschleiß führen kann. Ein eleganteres System besteht darin, das Drehmoment des Motors bei Auftreten von Schlupf kurzfristig abzusenken. Dies wird bei einem bekannten System durch selektives Austakten von Einspritz- und/oder Zündsignalen bewirkt, was jedoch unerwünschte Schwingungen im Kurbeltrieb und eine erhebliche Verschlechterung der Emissionswerte zur Folge hat. Auch thermische Probleme können in diesem Zusammenhang auftreten. Ähnliches gilt für Systeme, die eine Absenkung des Drehmoments über eine Verschiebung des Zündzeitpunktes bewirken.

Aus der US 5,467,751 A ist ein System zur Traktionskontrolle bekannt, bei dem im Verlauf der mechanischen Verbindung des Fahrpedals mit einer Drosselklappe ein Schrittmotor zwischengeschaltet ist, der über ein Getriebe innerhalb eines vorbestimmten Verstellbereichs eine Veränderung des Öffnungswinkels der Drosselklappe bewirken kann. Bei einem solchen System wird die Drosselklappe solange direkt mechanisch vom Fahrpedal beeinflusst als kein Schlupf auftritt. Wird jedoch ein unzulässiger Schlupf erfasst, so wird der Schrittmotor betätigt, um die Drosselklappe innerhalb des Verstellbereichs um einen vorbestimmten Winkel zu schließen. Auf diese Weise kann das Drehmoment abgesenkt werden, wodurch ein Durchdrehen der Antriebsräder verhindert wird. Ein solches System ist zwar grundsätzlich wirksam, es hat sich jedoch herausgestellt, dass die Ansprechverzögerungen relativ groß sind, so dass je nach Einstellung des Systems die Traktionskontrolle entweder unzureichend ist oder das effektiv verfügbare Drehmoment relativ stark verringert wird.

Weiters ist aus der US 5,161,507 A ein System bekannt, bei dem über einen Elektromotor eine Beeinflussung der Drosselklappe möglich ist. Auch hier sind aufgrund der aufwendigen Getriebeanordnungen lange Ansprechzeiten zu beobachten, die zu den oben beschriebenen Problemen führen.

Aufgabe der vorliegenden Erfindung ist es, diese Nachteile zu vermeiden und eine Vorrichtung der oben beschriebenen Art so weiterzubilden, dass eine Schlupfregelung erreicht wird, die ein extrem schnelles Ansprechverhalten aufweist, und dass eine Steigerung des effektiv zur Verfügung stehenden Drehmoments der Brennkraftmaschine erreicht wird.

Erfindungsgemäß ist vorgesehen, dass der Stellmotor die Drosselklappe in einem direkten Übersetzungsverhältnis betätigt und dass die Steuerungseinrichtung aufgrund der Stellung des Fahrpedals und gegebenenfalls anderer Parameter eine vorläufige Sollstellung der Drosselklappe berechnet, dass sie weiters aufgrund des Signals des Sensors einen Korrekturwert berechnet, der vom augenblicklichen Schlupf abhängt, und dass sie diese vorläufige Stellung um den Korrekturwert korrigiert, um eine Sollstellung zu erhalten, und den Stellmotor entsprechend ansteuert.

Wesentlich an der Erfindung ist, dass die Drosselklappe nur mit dem Stellmotor in Verbindung steht, das heißt, dass keine mechanische Verbindung zwischen dem Fahrpedal und der Drosselklappe besteht. Falls ein Notbetrieb des Motors auch im Fall einer Störung der Drosselklappensteuerung erforderlich ist, kann auch eine einkuppelbare Verbindung der Drosselklappe mit einem Gasseil vorgesehen sein. Im Normalbetrieb liegt jedoch keine wirksame mechanische Verbindung vor.

Ein weiterer wesentlicher Aspekt der Erfindung ist, dass durch die direkte Betätigung der Drosselklappe durch den Stellmotor ein sehr schnelles Ansprechverhalten erreicht wird, da kein Getriebe erforderlich ist. Die Motorsteuerung berechnet aufgrund der Stellung des Fahrpedals und anderer Einflussgrößen, wie etwa der Motordrehzahl, der Motortemperatur, der Last oder dgl., eine vorläufige Sollstellung der Drosselklappe. Ausgehend von dieser Stellung wird nun in erfindungsgemäßer Weise bei Auftreten von Schlupf eine abweichende Stellung berechnet. Diese Berechnung kann entweder in die Motorsteuerung integriert sein oder in einer eigenen Steuerungseinrichtung der Motorsteuerung nachgeschaltet sein. Zur Berechnung des Korrekturwerts wird dabei ein Kennfeld verwendet, in das neben dem aktuell beobachteten Schlupf vor allem Parameter eingehen, die das Drehmoment des Motors beeinflussen.

Vorzugsweise sind mehrere Drosselklappen vorgesehen, die gemeinsam von einem Stellmotor betätigt werden. Die Gasdynamik eines Hochleistungsmotors kann durch die Verwendung von Einzeldrosselklappen in den Ansaugkrümmern wesentlich verbessert werden. Über eine Hebelanordnung kann ein einzelner Stellmotor diese Drosselklappen gemeinsam betätigen. Es können die Drosselklappen auch auf einer gemeinsamen Welle angeordnet sein, die vom Stellmotor verdreht wird.

Alternativ dazu kann vorgesehen sein, dass mehrere Drosselklappen vorgesehen sind, die jeweils von einem eigenen Stellmotor betätigt werden. Dadurch ist die Verwendung kleiner Stellmotoren möglich, was durch die Verringerung der Trägheitsmomente ein besonders schnelles Ansprechverhalten gewährleistet.

Besonders vorteilhaft ist es, wenn ein Sensor zur Erfassung der jeweiligen Stellung der Drosselklappe vorgesehen ist. Ein solcher Sensor kann als Potentiometer oder als Hall-Sensor ausgebildet sein.

In einer besonders bevorzugten Ausführungsvariante der Erfindung ist der Stellmotor als elektrischer Schrittmotor ausgebildet. Auf diese Weise kann die Verstellung mit dem geringstmöglichen schaltungstechnischen Aufwand realisiert werden.

Besonders günstig ist es generell, wenn die Steuerungseinrichtung den Istwert der Stellung der Drosselklappe mit der korrigierten Sollstellung vergleicht und in Abhängigkeit von der Differenz Frequenz, Stromstärke und Impulslänge von Stellimpulsen errechnet, um die Sollstellung schnellstmöglich zu erreichen. Bei plötzlichem Auftreten von Schlupf kann auf diese Weise die Drosselklappe mit maximaler Geschwindigkeit in Schließrichtung bewegt werden. Wenn die Iststellung der Drosselklappe der korrigierten Sollstellung nahe kommt, kann durch Änderung von Frequenz, Stromstärke und Impulslänge die Schließgeschwindigkeit verringert werden, um eine überschießende Regelung zu vermeiden.

Alternativ zur elektrischen Ansteuerung kann auch eine hydraulische oder pneumatische Verstellung vorgesehen sein. Dadurch kann das elektrische Bordnetz eines Kraftfahrzeugs entlastet werden.

Weiters betrifft die Erfindung ein Verfahren zur Steuerung einer Brennkraftmaschine mit innerer Verbrennung, bei dem die augenblickliche Stellung eines Fahrpedals erfasst wird, aufgrund dieses Wertes und gegebenenfalls weiterer Parameter eine vorläufige Sollstellung der Drosselklappe berechnet wird und wobei der Schlupf mindestens eines Antriebsrades erfasst wird, und wobei weiters aufgrund des erfassten Schlupfs ein Korrekturwert ermittelt wird, um die Sollstellung der Drosselklappe zu korrigieren. Besonders vorzugsweise ist dabei vorgesehen, dass der Öffnungswinkel der Drosselklappe in Abhängigkeit von Motorparametern, insbesondere der Motordrehzahl begrenzt wird. Ein zu schnelles Öffnen der Drosselklappe bewirkt eine vorübergehende Verschlechterung der Verbrennung, was neben einer Erhöhung der Abgasemission insbesondere im Bereich der unverbrannten Kohlenwasserstoffe zu einer Verringerung des Drehmoments führt. Dies gibt dem Fahrer das Gefühl eines schlechten Ansprechverhaltens und geringer Motorleistung. Neben diesen unerwünschten Wirkungen besteht jedoch auch die Gefahr einer negativen Rückkoppelung beim Auftreten von Schlupf, was eine echte Gefährdung der Fahrsicherheit darstellt. Tritt nämlich nach einer plötzlichen und schnellen Öffnung der Drosselklappe Schlupf an den Antriebsrädern auf, so wird durch die Traktionskontrolle eine Schließbewegung der Drosselklappe veranlasst. Wenn zu diesem Zeitpunkt eine Situation wie oben beschrieben vorliegt, so kann durch das Schließen der Drosselklappe um einen bestimmten Winkel eine Steigerung des verfügbaren Drehmoments verursacht werden, was zu einer weiteren Vergrößerung des Schlupfs führt, wodurch der Fahrer die Kontrolle über das Fahrzeug verlieren kann. Wird jedoch die Öffnung der Drosselklappe so begrenzt, dass der Bereich abnehmenden Drehmoments nicht erreicht werden kann, so kann ein solcher Effekt nicht auftreten. Daneben wird auch das Ansprechverhalten und die Beschleunigung optimiert, und es werden die Emissionswerte verbessert.

In der Folge wird die vorliegende Erfindung anhand der in den Figuren dargestellten Ausführungsbeispielen näher erläutert.

Es zeigen schematisch:
- Fig. 1 eine erste Ausführungsvariante der Erfindung;
- Fig. 2 ein Detail einer weiteren Ausführungsvariante der Erfindung;
- Fig. 3 eine weitere Ausführungsvariante der Erfindung;
- Fig. 4 und 5 Schaltungsdiagramme zur Erklärung der Ausführungsvariante von Fig. 3.

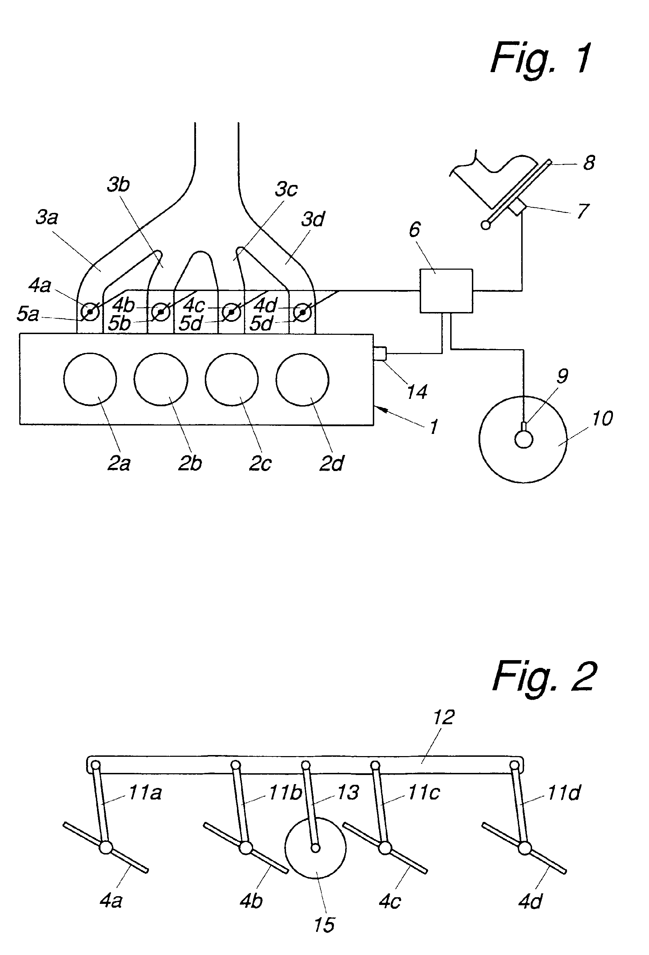

In der Fig. 1 ist eine Brennkraftmaschine 1 mit vier Zylindern 2a, 2b, 2c, 2d schematisch dargestellt. In vier Saugrohren 3a, 3b, 3c, 3d sind Drosselklappen 4a, 4b, 4c, 4d angeordnet, die von Schrittmotoren 5a, 5b, 5c, 5d betätigt werden. Die Schrittmotoren 5a, 5b, 5c, 5d, die die Stellmotoren darstellen, werden von einer Steuerungseinrichtung 6 angesteuert, die mit einem Sensor 7 zur Erfassung der Stellung eines Fahrpedals 8, mit Sensoren 9 an den Rädern 10 zur Erfassung des Schlupfs an den Antriebsrädern und mit einem Drehzahlsensor 14 in Verbindung steht. Die Erfassung des Schlupfs erfolgt in an sich bekannter Weise, indem die Raddrehzahlen untereinander verglichen werden. Liegt die Drehzahl der Antriebsräder beispielsweise deutlich über der der nicht angetriebenen Räder, so deutet dies auf Schlupf hin, es könnte jedoch auch ein Blockieren eines nicht angetriebenen Rades beim Bremsen vorliegen oder das Abheben eines kurveninneren Rades in schnell gefahrenen Kurven bei harter Fahrwerkabstimmung. Durch Beobachtung des Vorzeichens der Drehzahländerung kann dieser Fall ausgeschlossen werden. Auch der Vergleich der Drehzahlen der Räder einer Achse untereinander ermöglicht den Ausschluss von Fehlinterpretationen der Messwerte. Je nach Bedarf können dabei von der Steuerungseinrichtung 6 Signale von weiteren nicht dargestellten Sensoren, wie etwa einem Lenkwinkelsensor oder einem Längsbeschleunigungssensor ausgewertet werden. Im Fall von Fahrzeugen mit Allradantrieb kann zur Erfassung des Schlupfs ein nicht dargestellter Radarsensor zur berührungslosen Messung der Fahrzeuggeschwindigkeit zusätzlich zu den Radsensoren 9 vorgesehen sein

Die Ausführungsvariante der Fig. 2 unterscheidet sich von der der Fig. 1 dadurch, dass die einzelnen Drosselklappen 4a, 4b, 4c, 4d durch Hebel 11a, 11b, 11c, 11d betätigt werden, die mit einer Betätigungsstange 12 in Verbindung stehen. Ein einzelner Schrittmotor 15 treibt über einen Hebel 13 die Betätigungsstange 12 an. Auch bei dieser Ausführungsvariante erfolgt die Betätigung der einzelnen Drosselklappen 4a, 4b, 4c, 4d direkt durch den Schrittmotor 15, d.h. ohne Getriebe, wodurch eine schnelle Verstellbewegung erreicht wird.

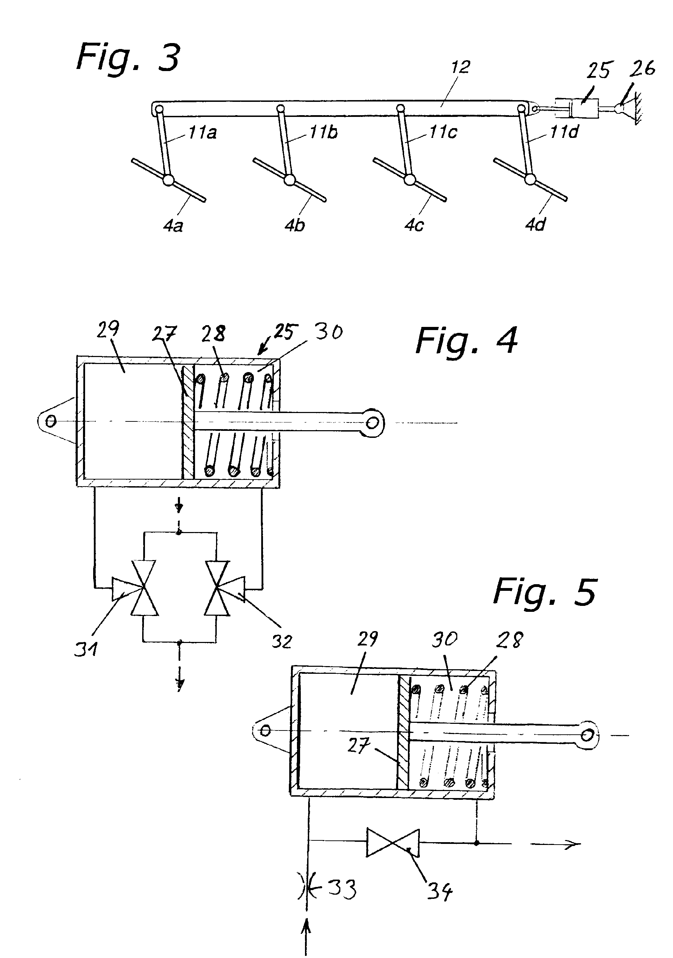

In der Ausführungsvariante der Fig. 3 ist die Stange 12 mit einem Hydraulikzylinder 25 verbunden, der den Stellmotor bildet und der an einem festen Punkt 26 angelenkt ist. Aus Fig. 4 ist ersichtlich, dass in dem Hydraulikzylinder 25 ein Kolben 27 vorgesehen ist, der durch eine Feder 28 in eine Richtung vorgespannt ist, die der Leerlaufstellung entspricht. Die beiden Kammern 29, 30 des Hydraulikzylinders 25 sind über zwei Dreiwegeventile 31, 32 angesteuert, wobei die Stellung des Kolbens 27 über das Taktverhältnis bestimmt wird. Die Ausführungsvariante der Fig. 5 unterscheidet sich insofern von der der Fig. 4 als das Hydraulikmedium über eine Drossel 33 zugeführt wird und ein Steuerventil 34 vorgesehen ist, des die Kammer 29 entlastet. Die beschriebenen Möglichkeiten der Ansteuerung sind nur beispielhaft angegeben und können nach Bedarf abgeändert werden.

Die Ausführungsvarianten der Fig. 3 bis 5 sind besonders robust gegenüber Schwingungen und Vibrationen. Anstelle des Hydraulikzylinders 25 kann auch ein Pneumatikzylinder eingesetzt werden. Wesentlich ist auch bei diesen Ausführungsvarianten, dass auf ein zwischengeschaltetes Getriebe verzichtet wird.

Die vorliegende Erfindung ermöglicht es, eine wesentliche Verbesserung des Ansprechverhaltens einer Traktionskontrolle zu erzielen. Dabei wird das verfügbare Drehmoment des Motors insbesondere im unteren Drehzahlbereich um 10% oder mehr gesteigert, bei gleichzeitiger Verringerung des Kraftstoffverbrauchs und der Abgasemission.

## Patentansprüche

1. Vorrichtung zur Steuerung einer Brennkraftmaschine mit innerer Verbrennung, mit mindestens einer Drosselklappe (4a, 4b, 4c, 4d) zur Steuerung des Durchflusses der angesaugten Luft bzw. des angesaugten Gemisches, die von einem Stellmotor (5a, 5b, 5c, 5d; 15; 25) betätigt wird, einem Fahrpedal (8) zur Beeinflussung der Stellung der Drosselklappe (4a, 4b, 4c, 4d), einer Steuerungseinrichtung (6) zur Ansteuerung des Stellmotors (5a, 5b, 5c, 5d; 15; 25) und einem Sensor (9) zur Erfassung des Schlupfs von mindestens einem Antriebsrad (10), **dadurch gekennzeichnet,** dass der Stellmotor (5a, 5b, 5c, 5d; 15; 25) die Drosselklappe (4a, 4b, 4c, 4d) in einem direkten Übersetzungsverhältnis betätigt und dass die Steuerungseinrichtung (6) aufgrund der Stellung des Fahrpedals (8) und gegebenenfalls anderer Parameter eine vorläufige Sollstellung der Drosselklappe (4a, 4b, 4c, 4d) berechnet, dass sie weiters aufgrund des Signals des Sensors (9) einen Korrekturwert berechnet, der vom augenblicklichen Schlupf abhängt, und dass sie diese vorläufige Stellung um den Korrekturwert korrigiert, um eine Sollstellung zu erhalten, und den Stellmotor (5a, 5b, 5c, 5d; 15; 25) entsprechend ansteuert.

2. Vorrichtung nach Anspruch 1, **dadurch gekennzeichnet,** dass mehrere Drosselklappen (4a, 4b, 4c, 4d) vorgesehen sind, die gemeinsam von einem Stellmotor (15; 25) betätigt werden.

3. Vorrichtung nach Anspruch 2, **dadurch gekennzeichnet,** dass mehrere Drosselklappen (4a, 4b, 4c, 4d) auf einer gemeinsamen Welle angeordnet sind, die von einem Stellmotor verdreht wird.

4. Vorrichtung nach Anspruch 1, **dadurch gekennzeichnet,** dass mehrere Drosselklappen (4a, 4b, 4c, 4d) vorgesehen sind, die jeweils von einem eigenen Stellmotor (5a, 5b, 5c, 5d) betätigt werden.

5. Vorrichtung nach einem der Ansprüche 1 bis 4, **dadurch gekennzeichnet,** dass ein Sensor zur Erfassung der jeweiligen Stellung der Drosselklappe (4a, 4b, 4c, 4d) vorgesehen ist.

6. Vorrichtung nach einem der Ansprüche 1 bis 5, **dadurch gekennzeichnet,** dass der Stellmotor als elektrischer Schrittmotor (5a, 5b, 5c, 5d) ausgebildet ist.

7. Vorrichtung nach Anspruch 6, **dadurch gekennzeichnet,** dass die Steuerungseinrichtung den Istwert der Stellung der Drosselklappe (4a, 4b, 4c, 4d) mit der korrigierten Sollstellung vergleicht und in Abhängigkeit von der Differenz Frequenz, Stromstärke und Impulslänge von Stellimpulsen für den Schrittmotor (5a, 5b, 5c, 5d)errechnet, um die Sollstellung schnellstmöglich zu erreichen.

8. Vorrichtung nach einem der Ansprüche 1 bis 5, **dadurch gekennzeichnet,** dass der Stellmotor als Hydraulikzylinder (25) oder Pneumatikzylinder ausgebildet ist.

9. Verfahren zur Steuerung einer Brennkraftmaschine mit innerer Verbrennung, bei dem die augenblickliche Stellung eines Fahrpedals (8) erfasst wird, aufgrund dieses Wertes und gegebenenfalls weiterer Parameter eine vorläufige Sollstellung der Drosselklappe (4a, 4b, 4c, 4d) berechnet wird und wobei der Schlupf mindestens eines Antriebsrades (10) erfasst wird, und wobei weiters aufgrund des erfassten Schlupfs ein Korrekturwert ermittelt wird, um die Sollstellung der Drosselklappe (4a, 4b, 4c, 4d) zu korrigieren.

10. Verfahren nach Anspruch 9, **dadurch gekennzeichnet,** der Öffnungswinkel der Drosselklappe (4a, 4b, 4c, 4d) in Abhängigkeit von Motorparametern begrenzt wird.
